# EUROPEAN PATENT SPECIFICATION

(11) **EP 0 435 183 B1**
(45) Date of publication and mention of the grant of the patent: **13.03.1996**
(21) Application number: 90125070.4
(22) Date of filing: 21.12.1990
(51) Int. Cl.: F02M 51/08, F02D 41/40

(54) **High pressure fuel injection unit and method for controlling same**
Hochdruckkraftstoffeinspritzeinheit und Methode, und dieselbe zu steuern
Unité d'injection de carburant haute pression et méthode de commande

(30) Priority: 25.12.1989 JP 336929/89
(43) Date of publication of application: 03.07.1991
(73) Proprietor: YAMAHA HATSUDOKI KABUSHIKI KAISHA, Iwata-shi Shizuoka-ken, 438 (JP)
(72) Inventor: Taue, Jun, Iwata-shi, Shizuoka-ken (JP)
(74) Representative: Grünecker, Kinkeldey, Stockmair & Schwanhäusser Anwaltssozietät

(56) References cited:
- FR-A- 2 441 061
- GB-A- 1 448 567
- GB-A- 2 052 794
- PATENT ABSTRACTS OF JAPAN vol. 007, no. 159 (M-228)13 July 1983 & JP-A-58 065 968 ( NIPPON KOKUYU TETSUDO ) 19 April 1983
- PATENT ABSTRACTS OF JAPAN vol. 009, no. 213 (M-408)30 August 1983 & JP-A-60 073 031 ( DAIHATSU KOGYO KK ) 25 April 1985

## Description

The present invention relates to a high pressure fuel injection unit for an engine and a method for controlling same according to the preamble of claims 6, 1 and 2, respectively.

Such a high pressure fuel injection unit is suitable for feeding a high speed diesel engine, for example.
Specifically the present invention is directed to improvement of the control method for performing a fuel injection cycle in order to reduce the generation of NOₓ gas and engine knocking or noisy combustion which frequently occurs under high temperature/high pressure combustion conditions. Moreover, it is intended to reduce the amount HC gas generation caused by incombusted fuel as well as the generation of CO gas caused by an incomplete combustion.

Conventionally high speed diesel engines are equipped with a high pressure fuel injection unit of the so-called accumulator type the structure of which comprises a casing which is sub-divided by partitioning wall member into a valve chamber and an accumulator chamber for accumulating pressurized fuel therein. Moreover, an injection valve body for controlling, i.e. opening or closing a fuel injection nozzle which is fluidly communicated to the fuel accumulator chamber and a solenoid disposed within the valve chamber are accommodated. Said solenoid is adapted to drive the injection valve body to perform a fuel injection cycle in response to the energization of a coil of said solenoid. A fuel supply system is connected to this high pressure fuel injection unit for feeding highly pressurized fuel to the accumulator chamber of the unit.

Specifically the fuel is pressurized by a high pressure pump communicated to a fuel tank and pressurized fuel is supplied to the accumulator chamber of the fuel injection unit wherein the injection valve body is retractable from the fuel injection nozzle to open same for starting a fuel injection cycle and is moveable towards the fuel injection nozzle to close the fuel injection opening through which fuel from the accumulator chamber is injected into a combustion chamber of the engine, thus, terminating the fuel injection cycle. The movement of the injection valve body is triggered by energization or deenergization of the solenoid disposed in that valve chamber of the fuel injection unit.

It is common to control the amount of fuel injected through such a fuel injection unit during a fuel injection cycle by varying the duration of energization of the solenoid coil, specifically by the varying the pulse width of the control signal (duty ratio) under constant fuel pressure conditions determined by the fuel pump which is adapted to perform the pressurization of the fuel supply to the injection unit. Specifically the driving pulse width (and correspondingly the injection period of fuel injection) is shortened under low load/low speed conditions of the engine which require only a smaller amount of fuel to be applied as the fuel consumption is smaller. On the other hand, the driving pulse width and, accordingly, the injection period is expanded under high load/high speed operational conditions of the engine, wherein the fuel consumption of the engine is increased. In this way an appropriate amount of fuel corresponding to the requirements of the combustion process under all operating conditions can be supplied to the engine. With a high pressure fuel injection unit and a method for controlling same as indicated here above difficulties have arisen to perform an optimal fuel injection throughout the entire operating range of the engine from a low revoluation speed to a high speed rotation thereof.

For example, in case the fuel injection pressure, i.e. the pressure value of the fuel supplied to the injection unit determined by the fuel pump is set such that the pulse width representing the injection period is controlled to be optimal during a high load/high speed rotation of the engine (taking the high level of fuel pressurization into consideration) the injection period becomes unappropriately shortened during low load/low speed rotational conditions which require only a small amount of fuel being injected. Thus, the combustion becomes undesirably abrupt and, accordingly, the generation and radiation of engine noise becomes more severe during said low load/low speed revolution conditions of the engine. Moreover, the steep rate of pressure rise results in an increased fuel consumption and generation of NOₓ gas under high pressure combustion conditions accompanied by a high combustion temperature.

In case, on the other hand, the fuel pressure is set to a value that the injection period becomes optimal during low load/low speed operational conditions leading to a relatively low value of fuel pressurization the duration of the injection period becomes too long resulting in the amount of HC gas causes by incombusted fuel and CO gas caused by an incomplete combustion will increase within the high revolution speed range of the engine. Thus, the amounts of NOₓ gas on the one hand and HC-CO gases on the other hand, occur in a reciprocal relationship, i.e. the reduction of one of them is accompanied by an increase of others of them and, therefore, it is difficult to reduce all of them.

A fuel injection unit and a method for controlling the same according to the preamble of claims 6 and 1, respectively are known from GB-A-14 48 568. The known method and device are however unsatisfactory regarding the fuel injection pattern with respect to harmful substances in the exhaust gasses.

Accordingly, it is an objective of the present invention to provide a high pressure fuel injection unit for an engine and a method for controlling such an injection unit enabling to reduce the emission of both NOₓ gas on the one hand and HC-CO gases on the other hand under all operating conditions.

According to the present invention, as regards the method aspects, the aforeindicated objective is performed in that the injection nozzle is opened gradually and closed abruptly. Another solution for performing the objective of the present invention in its method aspects keeps an opening of the injection nozzle small after starting fuel injection nearly until a termination of an injection period, then the said opening is abruptly increased and at last is abruptly decreased.

Preferrably the injection period is controlled to be substantially constant throughout the operational revolution speed range from low to high speed operation of the engine whereas the pressure of the fuel to be supplied to the accumulator chamber of the fuel injection unit is controlled to increase in line with the increase of the revolution speed of the engine in order to ensure the required amount of fuel to be injected.

As regards the apparatus aspects, according to the present invention the aforeindicated objective is performed in that the injection valve body is prebiased into its injection nozzle closing position by an urging spring in such a manner that the valve characteristic of the fuel injection valve is adjusted so that the valve body retracts from fuel injection nozzle gradually during an opening movement, but approaches the fuel injection nozzle quickly during a closing movement.

Preferably, the fuel injection valve is opened or closed in compliance with respective predetermined crank angles and the timing of starting and terminating fuel injections, respectively, are substantially constant throughout the range of engine revolution speeds from low to high values thereof and the pressure control means is adapted to perform a pressure control of the fuel to be supplied to the fuel injection unit in a manner that said pressure becomes higher as the revolution speed of the engine increases supplying an appropriate required amount of fuel to the engine.

Within the framework of this application term "substantially constant" or "substantially independent" used to characterize the fuel injection periods or timings with respect to the revolution speed and/or load conditions of the engine are considered to cover smaller variations of said timings in response to different load or speed conditions of the engine as well (specifically within the range of 5 to 10 degrees, respectively).

On the other hand, the reason why said timings of starting or terminating the fuel injection are each said to be substantially or generally constant irrespective of the revolution speed of the engine is as follows:

Generally, there is a certain delay or lag time from the start of fuel injection to the firing of the fuel within the combustion chamber and a vapourized amount of fuel prior to firing results in abrupt premixed combustion which is a source of loud engine knocking noises being radiated. Accordingly, the injection start timing must be set from the view point of reducing the firing lag time as indicated above to restrain premix combustion and the occurrence of engine knocking irrespective of the rotational speed of the engine, that means independent from a low or high speed range operation. In view of different load conditions it is desirable to set the injection start timing to be 0 to 5 degrees ahead of the top dead centre position of a piston in terms of the crank angle.

If, on the other hand, the timing of terminating the fuel injection is too late the combustion is not timely completed, and increased consumption of fuel occurs and HC gas and CO gas are generated undesirably. In case the injection period terminates too early a smooth combustion cannot be obtained but same becomes abrupt yet increasing the highest combustion pressure, effects the fuel consumption and causes the generation of combustion noise and an undesirable amount of NOₓ gas. Accordingly, the timing of terminating a fuel injection cycle must be considered to prevent the generation of the white smoke and, it has been found desirable to terminate the injection period in the range of 25 to 30 degrees after the top dead centre position of a piston in terms of the crank angle.

The figures indicated above for setting the timings of starting and terminating fuel injections, respectively, are to be suitably selected taking the characteristics of the related engine exhaust gas purification measures etc. in regard.

Since the fuel injection nozzle opening/closing operation is effected with reference to the crank rotating angle, the timings of fuel injection starting and ending can be set at the optimum timings and the fuel injection period can be always kept at an optimum period throughout entire engine operating range from the low rotation speed range to the high rotation speed range. That is, since the injection nozzle opening timing is set, e.g., 0 to 5 degrees before the top dead center in any engine operating range, vaporized premix amount is reduced, knocking can be prevented, and NOₓ generation can be restrained. Further, since the injection nozzle closing timing is set, e.g., 25 to 35 degrees after the top dead center, generation of white smoke in the exhaust gas can be prevented and generation of HC and CO can be restrained.

Further, as regard the fuel injection amount, since a pressure control means is provided for controlling the pressure of the fuel to be supplied to the fuel injection nozzle so that the injection amount through the nozzle above may reach the required injection amount, required injection amount can be secured while synchronizing the fuel injection nozzle opening/closing operation with the predetermined crank rotating angle, and control of the engine output can be effected under such conditions.

Other preferred embodiments of the present invention are laid down in further dependent claims.

Hereinafter, the present invention is explained and illustrated in greater detail by means of preferred embodiments thereof in conjunction with accompanying drawings, wherein:
Fig. 1 is a sectional view of a high pressure fuel injection unit and related control means according to the present invention,
Figs. 2(a) and 2(b) are diagrams showing basic fuel injection patterns for two-cycle and four-cycle engines, respectively,
Figs. 3(a) to 3(d) are diagrams showing the fuel injection patterns of Fig. 3 as optimal patterns applied to various engine operating conditions,
Figs 4(a) and 4(b) are diagrams showing other embodiments of fuel injection patterns for two-cycle and four-cycle engines, respectively.

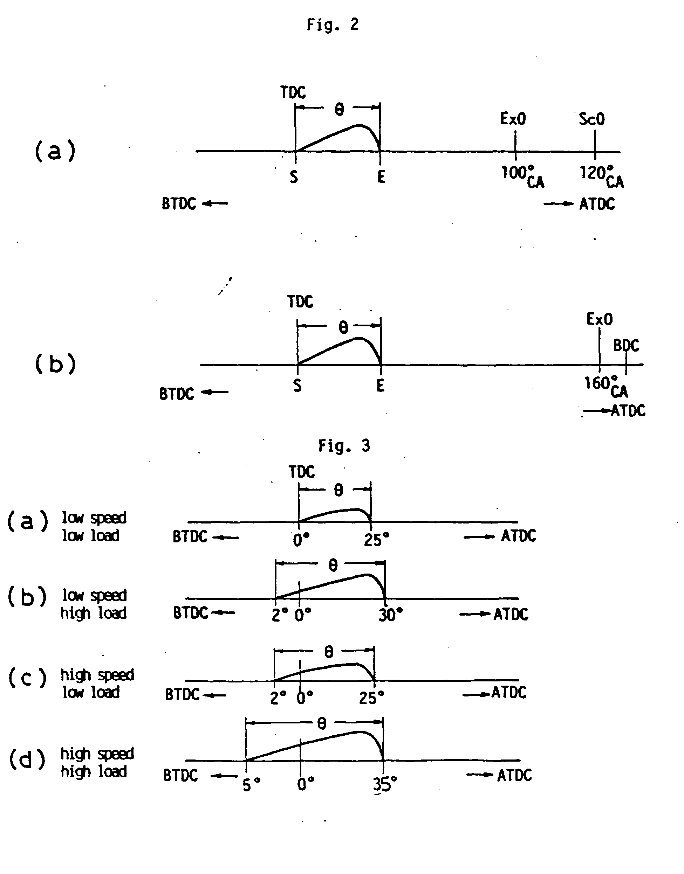

In Figs.2 and 3, the lift amount of the injection valve body is taken on the ordinate, and the crank angle ('CA) is taken on the abscissa where the top dead center, before top dead center and after top dead center are denoted by TDC, BTDC and ATDC, respectively. Further, BDC, ExO and ScO denote bottom dead center, exhaust port opening timing and scavenging port opening timing, respectively.

In the drawings, the reference number 1 denotes a fuel injection unit for injecting fuel into the engine, 2 denotes a high pressure pump for sucking the fuel in the fuel tank 3 through a filter 4 and pressurizing it up to a predetermined pressure, 28 denotes a regulator interposed on the high pressure pipe 5a connecting the fuel injection unit 1 and the high pressure pump 2 above for regulating the supply pressure to the injection unit 1 above at a predetermined pressure.

The fuel injection unit 1 above has a structure in which its casing 6 is partitioned by a partitioning plate 7 into a valve chamber 8 and an accumulator chamber 9, and an injection valve body 10 for opening/closing the injection nozzle 20b and a solenoid coil 11 are accomodated within the accumulator chamber 9 and the valve chamber 8, respectively. Further, this valve chamber 8 is communicated with the fuel tank 3 above through a fuel return tube 5b.

The casing 6 above is composed of a bottomed cylindrical inner case 12 and a cylindrical outer case 13 having a nozzle cap 20 screwed in its lower (as shown in Fig.l) end, and the inner case 12 above is screwed into the upper end of the outer case 13.

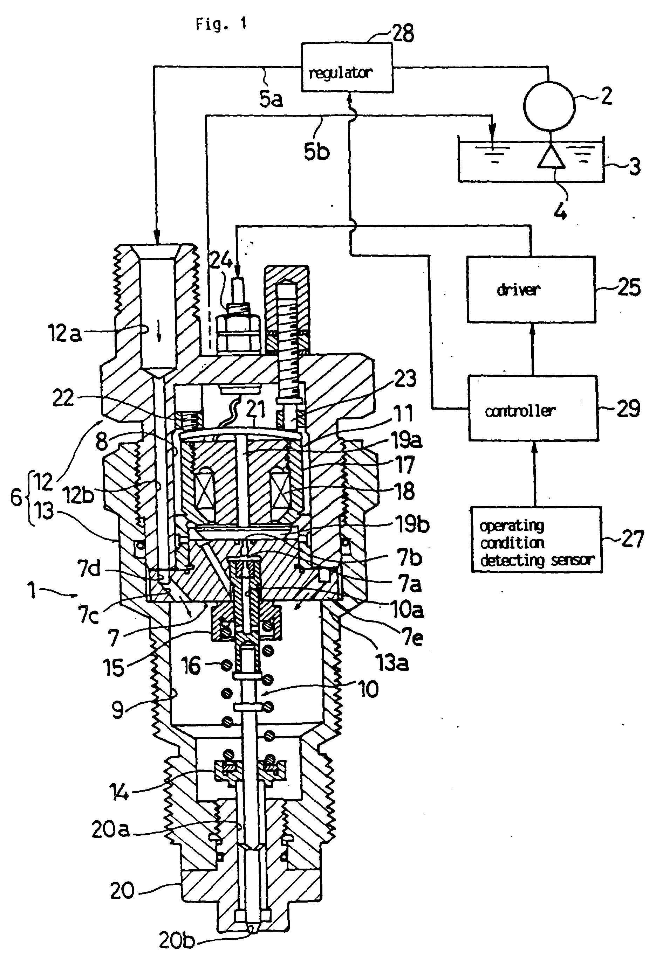

The partitioning plate 7 above is disk-shaped and its flange portion 7e is interposed between the step portion 13a of the outer case 13 above and the lower (as shown in Fig.1) end of the inner case 12 above. The accumulator chamber 9 is communicated with the high pressure pipe 5a above through a fuel supply hole 7c formed through the partitioning plate 7 above, a ring-shaped groove 7d and fuel introducing holes 12b and 12a formed through the inner case 12 above.

Through the axis portion of the partitioning plate 7 above is formed a back pressure chamber 7a which is a cylindrical space having a small diameter and communicated with the valve chamber 8 above through an orifice 7b. In this back pressure chamber 7a is slidably inserted the upper end portion of the injection valve body 10, and a communicating hole 10a formed through the upper end portion above communicates the back pressure chamber 7a above with the accumulator chamber 9 above.

The lower end portion of the injection valve body 10 above is inserted in the guide hole 20a formed through the nozzle cap 20 so that the injection nozzle 20b of the nozzle cap 20 above may be opened/closed by its tip end portion. Between the lower spring seat 14 mounted midway of this injection valve body 10 and the upper spring seat 15 mounted so as to engage the lower face of the partitioning plate 7 is interposed an urging spring 16, which urges the injection valve body 10 in a direction for closing the injection nozzle 20b above.

The solenoid coil 11 above is of a structure in which, while a ring-shaped coil body 18 is disposed in a holder 17 which can be disassembled into inside and outside portions, a valve stem 19a is slidably inserted through the axis of the holder 17 above. The lower end portion of the holder 17 above is fitted onto and fastened on the upper outer periphery of the partitioning plate 7 above, and a valve plate 19b is formed integrally at the lower end of the valve stem 19a above so as to open/close the orifice 7b above which communicates to the back pressure chamber 7a above. The valve stem 19a above is pushed down at its upper end by a pushing spring 21, one end of which spring 21 is positioned on the holder 17 by a positioning pin 22 and the other end of which is pushed down by an adjusting rod 23. On the upper end portion of the inner case 12 above is mounted, in sealed state, an exterior connecting terminal 24 for the coil 18 above, to which terminal 24 is connected a driver 25 for driving the solenoid coil 11 above.

The reference numeral 29 denotes a controller for delivering a driving signal to the solenoid valve 11 of the fuel injection unit 1, and this is constructed so that, when various signals indicating the engine operating conditions, such as engine rotation speed, throttle opening, water temperature, oil temperature, fuel temperature, etc., are inputted in it from the operating condition detecting sensor 27, it may read out required informations (pulse widths, etc.) from the incorporated maps and output them to the driver 25.

Here, in this embodiment, its component members such as the injection valve body 10, urging spring 16, etc., are constructed so that its opening/closing characteristics (fuel injection pattern) may become wedge-shaped as shown in Figs.2(a) and 2(b). That is, the injection nozzle 20b is opened gradually and closed abruptly by the injection valve body 10. Further the pressure of the fuel to be supplied to the fuel injection unit 1 from the high pressure pump 2 is regulated by the regulator 28 at a pressure capable of supplying the required injection amount with the injection pattern above.

Further, the controller 29 above is of a structure in which it has a coil control circuit and a pressure control circuit, the former being for driving and controlling the coil body 18 for driving the injection valve body 10 so that the injection nozzle opening/closing operation may be effected in synchronism with the predetermined crank rotation angle, and the latter being for controlling the regulator 28 above so that the fuel injection amount at the injection nozzle 20b above may reach the required fuel amount within the period θ from nozzle opening to nozzle closing.

The construction of the coil control circuit of the controller 29 is described in detail hereafter. The opening timing S of the nozzle above is set at an as early crank angle as knocking is not caused in the engine, that is, near the top dead center (TDC), and the closing timing E is set generally at a crank angle which is a little earlier than the angle at which white smoke is caused in the engine exhaust gas, that is, at about 30 degrees after the top dead center, and, further, the nozzle opening and closing timings S and E are revised as shown in Fig.3 according to various signals from the operating condition detecting sensor 27 indicating engine operating conditions.

That is, under the low speed low load operating conditions, the nozzle opening timing S is revised to the top dead center (TDC) and the nozzle closing timing E is revised to about 25 degrees after the top dead center, which makes the injection period θ about 25 degrees in the crank angle (Fig.3(a)).

Further, under the low speed high load conditions, the nozzle opening timing S is revised to about 2 degrees before the top dead center and the nozzle closing timing E is revised to about 30 degrees after the top dead center, which makes the injection period θ about 32 degrees in the crank angle (Fig.3(b)).

Still further, under the high speed low load or high speed high load operating conditions, the nozzle opening timing S is set at about 2 degrees or 5 degrees before the top dead center and the nozzle closing timing E is set at about 25 degrees or 35 degrees after the top dead center, which makes the injection period θ about 27 degrees or 40 degrees in the crank angle, respectively (See Fig.3(c) or Fig.3(d)).

The action and effect of this embodiment are described next.

With this embodiment high pressure fuel injection unit for the engine, since the coil body 18 for operating the injection valve body 10 is driven and controlled through the controller 29 so that the injection nozzle 20b may be opened/closed in synchronism with the predetermined crank rotating angle, the opening timing of the nozzle is set at an as early timing as knocking is not caused in the engine (near 0∼5 degrees before the top dead center), and the closing timing of the nozzle is set at a timing a little earlier than the angle where white smoke is caused in the engine exhaust gas (near 25∼35 degrees after the top dead center), the fuel injection period θ can be always kept optimum throughout entire engine operating range from the low rotation speed range to the high rotation speed range. Therefore, abrupt combustion, uncombustion and incomplete combustion can all be avoided.

Further, since the injection starting timing S and the ending timing E are revised

according to the engine operating conditions, abnormal combustions above can be avoided more effectively.

Further, since the component members such as the urging spring 16, etc., are set in such a manner that the injection nozzle 20b is opened gradually and closed abruptly, the injection amount will be restrained small during the initial period of injection and then will be increased gradually after firing, by which premix combustion (abrupt combustion) can be avoided as far as possible, and generation of NOₓ gas and knocking noises under high temperature high pressure conditions can be surely reduced.

Further, since a regulator 28 is connected between the high pressure pump 2 and the fuel injection unit 1 to control the pressure of the fuel to be supplied to the injection nozzle 20b so that the injection amount from the injection nozzle above may reach an amount required during the period θ above from the nozzle opening timing to the nozzle closing timing, it is possible to actualize an engine output control under a condition where the injection nozzle 20b openig/closing operation is synchronized with the crank rotating angle.

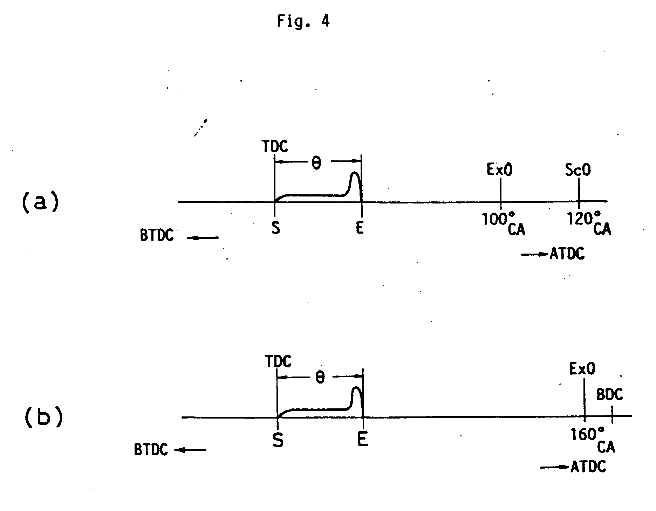

Further, although the component members such as the urging spring 16, etc., are set so that the opening/closing characteristics (injection pattern) of the injection valve body 10 may become wedge-shaped in the embodiment above, this injection pattern can be modified variously. For example, the injection pattern may be such as shown in Fig.4(a) (for 2-cycle engine) and Fig.4(b) (for 4-cycle engine), in which the injection nozzle opening is kept small from the starting nearly until the ending of the injection period, then is abruptly increased and at last is abruptly decreased. This can be actualized by providing a stopper for stopping the opening operation of the injection valve body 10 during a definite period after injection starting.

As described above, since an energization control means is provided for driving and conrolling the solenoid coil for driving the injection valve body so that the fuel injection nozzle opening/closing operation may be effected in synchronism with the predetermined crank rotating angle, and the injection nozzle is opened/closed generally at constant timings through the engine rotation speed from low to high, saying more concretely, since the nozzle opening timing is set as early as knocking is not caused in the engine and the nozzle closing timing is set a little earlier than the timing with which white smoke is generated in the engine exhaust gas, the fuel injection period can always be kept optimum throughout the entire engine operating range from slow rotation speed range to high rotation speed range, by which it becomes possible to avoid all of abrupt combustion, uncombuastion and incomplete combustion although the first is in a trade-off relationship with the rest two as regards the injection period.

Further, since a pressure control means for controlling the pressure of the fuel to be supplied to the fuel injection nozzle so that the injection amount from the fuel injection nozzle above may reach a required fuel amount, it is possible to actualize an engine output control under a condition where the injection nozzle 20b opening/closing operation is synchronized with the crank rotating angles, by which it becomes possible to obtain a diesel engine having NOₓ gas discharge and HC and CO gas discharges both reduced, combustion noise and vibration both reduced, and a fuel consumption improved.

Among Figs.1 through 3 for describing a high pressure fuel injection unit for the engine according to an embodiment of this invention, Fig.1 is a sectional view of a high pressure fuel injection unit, Fig.2(a) and Fig.2(b) are diagrams showing the basic fuel injection patterns in case of 2-cycle and 4-cycle engines, respectively, and Figs.3(a) through 3(d) are diagrams showing the optimum injection patterns according to various engine operating conditions. Fig.4(a) and Fig.4(b) are diagrams showing other examples of the fuel injection patterns in case of 2-cycle and 4-cycle engines, respectively.

## Claims

1. Method for controlling a high pressure fuel injection unit (1) for an engine comprising an injection timing solenoid (11) for driving an injection valve body (10) to control a fuel injection nozzle (20b), wherein a fuel injection timing is controlled through energization of said injection timing solenoid in terms of a predetermined crank angle of a crank shaft of the engine and a fuel pressure of the fuel to be injected is controlled in response to revolution speed and/or load conditions of the engine,
**characterised in that**
the injection nozzle (20b) is opened gradually and closed abruptly.

2. Method for controlling a high pressure fuel injection unit (1) for an engine comprising an injection timing solenoid (11) for driving an injection valve body (10) to control a fuel injection nozzle (20b), wherein a fuel injection timing is controlled through energization of said injection timing solenoid in terms of a predetermined crank angle of a crank shaft of the engine and a fuel pressure of the fuel to be injected is controlled in response to revolution speed and/or load conditions of the engine,
**characterised in that,**
an opening of the injection nozzle (20b) is kept small after starting fuel injection nearly until a termination of an injection period, then the said opening is abruptly increased and at last is abruptly decreased.

3. Method as claimed in claims 1 or 2 , **characterised in that,** an opening timing (S) of the fuel injection nozzle (20b) in terms of a crank angle of a crankshaft of the engine is set to be within a range of about 0 to 5 degrees before the top dead centre and responsive to the revolution speed and/or load conditions of the engine.

4. Method as claimed in at least one of the preceding claims 1 to 3, **characterised in that,** the opening timing (S) of the injection nozzle in terms of the crank angle is set to prevent the occurrence of engine knocking whereas the closing time (E) in terms of the crank angle is set to prevent white smoke occurring in the exhaust gas of the engine.

5. Method as claimed in at least one of the preceding claims 1 to 4, **characterised in that,** the closing timing (E) is set to be at about 25 to 35 degrees after the top dead centre in terms of the crank angle.

6. Method as claimed in at least one of the preceding claims 1 to 5, **characterised in that,** the closing timing (E) in the range of about 25 degrees to 35 degrees after the timing of the top dead centre position is responsive to the revolution speed and/or load conditions of the engine.

7. High pressure fuel injection unit for an engine comprising an injection timing solenoid for driving an injection valve body adapted to control a fuel injection nozzle of a fuel injection valve and a control means (25,27,29) for controlling fuel injection, said control means (25, 27, 29) being adapted to energise the injection timing solenoid (11) to control an opening timing (S) of the fuel injection nozzle (20b) in terms of a crank angle of the crankshaft of the engine, and a pressure control means (2,3,4,28,29) for controlling the fuel pressure in accordance with the revolution speed and/or load conditions of the engine, **characterised in that,** the injection valve body (10) is prebiased into its injection nozzle closing position by an urging spring (16) in such a manner that the valve characteristic of the fuel injection valve is adjusted so that the valve body retracts from the fuel injection nozzle gradually during an opening movement but approaches the fuel injection nozzle quickly during a closing movement.

8. High pressure fuel injection unit as claimed in claim 7, **characterised in that,** the control means for energising the injection timing solenoid comprises a control unit (29) adapted to receive input signals from several sensors (27) representing the engine operating conditions, and said control unit (29) operates a driver (25) for supplying drive signals to the injection timing solenoid (11).

9. High pressure fuel injection unit as claimed in claims 7 or 8, **characterised in that,** the control means (25,27,29) is adapted to set the opening timing (S) of the fuel injection nozzle to be within a range of about 0 to 5 degrees before the top dead centre and responsive to the revolution speed and/or load conditions of the engine.

10. High pressure fuel injection unit as claimed in at least one of claims 7 to 9, **characterised in that,** the control means (25,27,29) is adapted to set the closing timing (E) of the fuel injection nozzle to be within a range of about 25 to 35 degrees after top dead centre in response to engine speed and/or load conditions of the engine.

## Patentansprüche

1. Verfahren zur Steuerung einer Hochdruck-Kraftstoffeinspritzeinheit (1) für einen Motor, mit einer Einspritzzeitpunkt-Magnetspule (11) zum Antreiben eines Einspritzventilkörpers (10) zur Steuerung einer Kraftstoffeinspritzdüse (20b), wobei ein Kraftstoffeinspritzzeitpunkt durch die Anregung der Einspritzzeitpunkt-Magnetspule in Einheiten eines vorgegebenen Kurbelwinkels einer Kurbelwelle des Motors und eines Kraftstoffdruckes des Kraftstoffes, der eingespritzt werden soll, in Abhängigkeit von Drehzahl- und/oder Lastbedingungen des Motors gesteuert wird,
**dadurch gekennzeichnet,**
daß die Einspritzdüse (20b) allmählich geöffnet und abrupt geschlossen wird.

2. Verfahren zur Steuerung einer Hochdruck-Kraftstoffeinspritzeinheit (1) für einen Motor, mit einer Einspritzzeitpunkt-Magnetspule (11) zum Antreiben eines Einspritzventilkörpers (10) zur Steuerung einer Kraftstoffeinspritzdüse (20b), wobei ein Kraftstoffeinspritzzeitpunkt durch Anregung der Einspritzzeitpunkt-Magnetspule in Einheiten eines vorgegebenen Kurbelwinkels einer Kurbelwelle des Motors und eines Kraftstoffdruckes des Kraftstoffes, der eingespritzt werden soll, in Abhängigkeit von Drehzahl- und/oder Lastbedingungen des Motors gesteuert wird,
**dadurch gekennzeichnet,**
daß eine Öffnung der Einspritzdüse (20b) nach dem Beginn der Kraftstoffeinspritzung nahezu bis zu einem Ende einer Einspritzzeitdauer klein gehalten wird, anschließend diese Öffnung abrupt vergrößert und schließlich abrupt vermindert wird.

3. Verfahren nach Anspruch 1 oder 2, **dadurch gekennzeichnet,** daß ein Öffnungszeitpunkt (S) der Kraftstoffeinspritzdüse (20b) in Einheiten eines Kurbelwinkels der Kurbelwelle des Motors als in einem Bereich von ungefähr 0° bis 5° vor dem oberen Totpunkt liegend und als abhängig von den Drehzahl- und/oder Lastbedingungen des Motors festgelegt wird.

4. Verfahren nach zumindest einem der vorhergehenden Ansprüche 1 bis 3, **dadurch gekennzeichnet,** daß der Öffnungszeitpunkt (S) der Einspritzdüse in Einheiten des Kurbelwinkels so festgelegt wird, daß das Auftreten von Motorklopfen verhindert wird, während der Schließzeitpunkt (E) in Einheiten des Kurbelwinkels so festgelegt wird, daß das Auftreten von weißem Rauch in dem Abgas des Motors verhindert wird.

5. Verfahren nach zumindest einem der vorhergehenden Ansprüche 1 bis 4, **dadurch gekennzeichnet,** daß der Schließzeitpunkt (E) auf ungefähr 25° bis 35° nach dem oberen Totpunkt in Einheiten des Kurbelwinkels festgelegt wird.

6. Verfahren nach zumindest einem der vorhergehenden Ansprüche 1 bis 5, **dadurch gekennzeichnet,** daß der Schließzeitpunkt (E) im Bereich von ungefähr 25° bis 35° nach dem Zeitpunkt der oberen Totpunktstellung abhängig ist von den Drehzahl- und/oder Lastbedingungen des Motors.

7. Hochdruck-Kraftstoffeinspritzeinheit für einen Motor, mit einer Einspritzzeitpunkt-Magnetspule zum Antreiben eines Einspritzventilkörpers, der vorgesehen ist, um eine Kraftstoffeinspritzdüse eines Kraftstoffeinspritzventiles zu steuern, und mit einer Steuereinrichtung (25, 27, 29) zur Steuerung der Kraftstoffeinspritzung, wobei die Steuereinrichtung (25, 27, 29) vorgesehen ist, um die Einspritzzeitpunkt-Magnetspule (11) anzuregen, um einen Öffnungszeitpunkt (S) der Kraftstoffeinspritzdüse (20b) in Einheiten eines Kurbelwinkels der Kurbelwelle des Motors zu steuern, und mit einer Drucksteuereinrichtung (2,3,4, 28,29) zur Steuerung des Kraftstoffdruckes entsprechend den Drehzahl- und/oder Lastbedingungen des Motors, **dadurch gekennzeichnet,** daß der Einspritzventilkörper (10) in seine die Einspritzdüse verschließende Stellung durch eine Vorspannfeder (16) derart vorgespannt ist, daß die Ventilcharakteristik des Kraftstoffeinspritzventiles eingestellt wird, derart, daß der Ventilkörper sich von der Kraftstoffeinspritzdüse allmählich während einer Öffnungsbewegung zurückzieht, aber während einer Schließbewegung sich rasch der Kraftstoffeinspritzdüse nähert.

8. Hochdruck-Kraftstoffeinspritzeinheit nach Anspruch 7, **dadurch gekennzeichnet,** daß die Steuereinrichtung zum Anregen der Kraftstoffeinspritz-Magnetspule eine Steuereinheit (29) aufweist, die vorgesehen ist, um Eingangssignale von verschiedenen Sensoren (27), die die Motorbetriebsbedingungen repräsentieren, zu empfangen, und die Steuereinheit (29) ein Antriebsglied (25) zum Zuführen von Antriebssignalen an die Einspritzzeitpunkt-Magnetspule (11) betätigt.

9. Hochdruck-Kraftstoffeinspritzeinheit nach Anspruch 7 oder 8, **dadurch gekennzeichnet,** daß die Steuereinrichtung (25, 27, 29) vorgesehen ist, um den Öffnungszeitpunkt (S) der Kraftstoffeinspritzdüse so festzulegen, daß er innerhalb eines Bereiches von ungefähr 0° bis 5° vor dem oberen Totpunkt liegt und von den Drehzahl- und/oder Lastbedingungen des Motors abhängig ist.

10. Hochdruck-Kraftstoffeinspritzeinheit nach zumindest einem der Ansprüche 7 bis 9, **dadurch gekennzeichnet,** daß die Steuereinrichtung (25, 27, 29) vorgesehen ist, um den Schließzeitpunkt (E) der Kraftstoffeinspritzdüse so festzulegen, daß er innerhalb eines Bereiches von ungefähr 25° bis 35° nach dem oberen Totpunkt liegt, in Abhängigkeit von den Motordrehzahl- und/oder Lastbedingungen des Motors.

## Revendications

1. Méthode de commande d'une unité d'injection de carburant haute pression (1) destinée à un moteur comprenant un électro-aimant de synchronisation de l'injection (11) pour entrainer un corps de soupape d'injection (10) commandant une buse d'injection de carburant (20b), dans laquelle un instant d'injection de carburant est commandé par une activation dudit électro-aimant de synchronisation d'injection en termes d'angle de manivelle prédéterminé d'un vilebrequin du moteur et une pression du carburant à injecter est commandée en réponse à des conditions de vitesse de rotation et/ou de charge du moteur,
caractérisée en ce que
la buse d'injection (20b) est ouverte progressivement et fermée brusquement.

2. Méthode de commande d'une unité d'injection de carburant haute pression (1) destinée à un moteur comprenant un électro-aimant de synchronisation d'injection (11) pour entraîner un corps de soupape d'injection (10) commandant une buse d'injection de carburant (20b) , dans laquelle un instant d'injection de carburant est commandé par une activation dudit électro-aimant de synchronisation d'injection en termes d'angle de manivelle prédéterminé d'un vilebrequin du moteur et une pression du carburant à injecter est commandée en réponse à des conditions de vitesse de rotation et/ou de charge du moteur,
caractérisée en ce que
une ouverture de la buse d'injection (20b) est maintenue petite après démarrage de l'injection de carburant presque jusqu'à la fin d'une période d'injection, puis ladite ouverture est brusquement augmentée et, enfin, est brusquement diminuée.

3. Méthode selon les revendication 1 ou 2, caractérisée en ce qu'un instant d'ouverture (S) de la buse d'injection de carburant (20b) en termes d' angle de manivelle du moteur est réglé pour se situer dans une gamme d'environ 0 à 5 degrés avant le point mort supérieur et sensible aux conditions de vitesse de rotation et/ou de charge du moteur.

4. Méthode selon au moins l'une des revendications précédentes 1 à 3 , caractérisée en ce que l'instant d'ouverture (S) de la buse d'injection en termes d'angle de manivelle est réglé pour empêcher le moteur de produire des bruits de claquement tandis que l'instant de fermeture (E) en termes d'angle de manivelle est réglé pour empêcher une fumée blanche de se produire dans le gaz d'échappement du moteur.

5. Méthode selon au moins l'une des revendication précédentes 1 à 4 , caractérisée en ce que l'instant de fermeture (E) est réglé pour être d'environ 25 à 35 degrés après le point mort supérieur en termes d'angle de manivelle.

6. Méthode selon au moins l'une des revendication précédentes 1 à 5, caractérisée en ce que l'instant de fermeture (E) dans la gamme d'environ 25 degrés à 35 degrés après le réglage de la position au point mort supérieur est sensible aux conditions de vitesse de rotation et/ou de charge du moteur.

7. Unité d'injection de carburant haute pression destinée à un moteur comprenant un électro-aimant de synchronisation d'injection pour entraîner un corps de soupape d'injection adapté pour commander une buse d'injection de carburant d'une soupape d'injection de carburant et des moyens de commande (25, 27, 29) pour commander l'injection de carburant, lesdits moyens (25, 27, 29) étant adaptés pour activer 1' électro-aimant de synchronisation d'injection (11) en vue de commander un instant d'ouverture (S) de la buse d'injection de carburant (20b) en termes d' angle de manivelle du vilebrequin du moteur , et des moyens de commande de pression (2, 3,4,28, 29) pour commander la pression de carburant suivant les conditions de vitesse de rotation et/ou de charge du moteur, caractérisée en ce que le corps de soupape d'injection (10) est préalablement rappelé dans sa position de fermeture de buse d'injection par un ressort de pression (16) de telle sorte que la caractéristique de soupape de la soupape d'injection de carburant est réglée de façon à ce que le corps de soupape se retire progressivement de la buse d'injection de carburant pendant un mouvement d'ouverture mais s'approche rapidement de la buse d'injection de carburant pendant un mouvement de fermeture.

8. Unité d'injection de carburant haute pression selon la revendication 7, caractérisée en ce que les moyens de commande pour activer l' électro-aimant de synchronisation d'injection comprennent une unité de commande (29) adaptée pour recevoir des signaux de sortie provenant de plusieurs capteurs (27) représentant les conditions de fonctionnement du moteur , et ladite unité de commande (29) fait fonctionner un disposititf d'entraînement (25) pour appliquer des signaux d'entrainement à l'électro-aimant de synchronisation d'injection (11).

9. Unité d'injection de carburant haute pression selon les revendications 7 ou 8, caractérisée en ce que les moyens de commande (25, 27, 29) sont adaptés pour régler l'instant d'ouverture (S) de la buse d'injection de carburant pour se trouver à l'intérieur d'un domaine allant d'environ 0 à 5 degrés avant le point mort supérieur et sensibles aux conditions de vitesse de rotation et/ou de charge du moteur.

10. Unité d'injection de carburant haute pression selon au moins l'une des revendications 7 à 9, caractérisée en ce que les moyens de commande (25, 27, 29) sont adaptés pour régler l'instant de fermeture (E) de la buse d'injection de carburant pour se trouver dans la gamme d'environ 25 à 35 degrés après le point mort supérieur en réponse aux conditions de vitesse et/ou de charge du moteur.
